# EUROPEAN PATENT SPECIFICATION

(11) **EP 2 334 484 B1**
(45) Date of publication and mention of the grant of the patent: **10.08.2016**
(21) Application number: 09820877.0
(22) Date of filing: 13.10.2009
(51) Int. Cl.: B29C 43/24, B29C 55/18

(54) **METHOD FOR THE PRODUCTION OF HIGH TENACITY POLYOLEFIN SHEET**
VERFAHREN ZUR HERSTELLUNG EINER POLYOLEFIN-FOLIE VON HOHER ZÄHIGKEIT
PROCÉDÉ DESTINÉ À LA PRODUCTION D'UNE FEUILLE DE POLYOLÉFINE À TÉNACITÉ ÉLEVÉE

(30) Priority: 14.10.2008 US 287799; 06.01.2009 US 319321
(43) Date of publication of application: 22.06.2011
(73) Proprietor: E. I. du Pont de Nemours and Company, Wilmington, DE 19898 (US)
(72) Inventor: HARDING, Kenneth C., Chesterfield, VA 23832 (US); WEEDON, Gene, C., Richmond, VA 23234 (US)
(74) Representative: Dannenberger, Oliver Andre
(86) International application number: PCT/US2009/005580
(87) International publication number: WO 2010/044839

(56) References cited:
- WO-A1-2009/123717
- US-A- 4 436 682
- US-A- 5 160 470
- US-A- 5 628 845
- US-B1- 7 348 053

## Description

### Field of the Invention

The present invention relates to ultra high molecular weight polyethylene (UHMWPE) and other high molecular weight polyolefin materials useful for ballistic applications and more particularly to a novel and highly economical process for their production.

### Background of the Invention

The processing of ultra high molecular weight polyethylene (UHMWPE), i.e. polyethylene having a molecular weight in excess of about 2 million, is known in the polymer arts to be extremely difficult. Products made from such materials are, however, very strong, tough and durable.

In the following series of U.S. Patents filed by Kobayashi et al and assigned to Nippon Oil Co., Ltd. a number of inventions related to the fabrication of fibers and films of polyolefins generally and UHMWPE specifically, are described: U.S Patents Nos. 4,996,011, 5,002,714, 5,091,133, 5,106,555, 5,200,129, and 5,578,373. The processes described in these patents generally describe the continuous production of high strength and high modulus polyolefin films by feeding polyolefin powder between a combination of endless belts disposed in an up and down opposing relationship , compression molding the polyolefin powder at a temperature below its melting point between the endless belts and then rolling and stretching the resultant compression molded polyolefin into an oriented film. As compression molded, the sheet is relatively friable thus requiring the subsequent calendering or drawing operations to provide an oriented film that exhibits very good strength and durability properties. In fact, the strength of such materials produced by these processes can be 3 times that of steel on a weight basis and they exhibit very low creep.

Enhanced processes for the production of such materials have also been described in U.S. Patent No. 7,348,053.

A common element of all of these prior art processes is that they require compaction of an UHMWPE powder as the initial step in the production process. Until now, it has been the thinking of the UHMWPE manufacturing community that such powder compaction was necessary in order to place the material in a form that it could be subsequently rolled and drawn as described in the referenced prior art. Stated differently, it has been the thinking that in order to produce the product in a process involving the subsequent rolling and drawing steps to obtain the orientation required for the production of ballistically useful UHMWPE, the powder had to first be placed in the form of a sheet that demonstrated sufficient tenacity to be successfully processed in such subsequent rolling and drawing processes. In the prior art, such a form was obtained by compacting the powder into a relatively friable sheet that could be introduced into the rolling operation for subsequent processing.

The performance of this compaction process step, particularly in the production of UHMWPE sheets wider than 1-2 inches in width, requires the use of relatively massive, quite complex and very expensive equipment (measured in the millions of dollars for installed such equipment). Such equipment thus requires high levels of capital expenditures for installation and due to its complexity ongoing high operating and maintenance expenses.

U.S. Patent No. 4,436,682 to Knopp, issued March 13,1984 describes a process for compacting polymer powders into fully dense products. According to this patent, a polymer powder is fed from a hopper into the nip between two rolls, compacted therein at a temperature below the melting point of the polymer powder and withdrawn from the nip under tension to form a "fully dense" polymer sheet. According to Knopp, when his process is applied to an UHMWPE powder, the resulting sheet has a density of about 0.82g/cc which he designates as "substantially fully dense". It is well known that the density of UHMWPE is on the order of above 0.945g/cc. Hence, the product of Knopp's process is hardly "fully dense" and is unsuited to further processing by calendering or drawing, since it will tear or break when subjected to such processes.

It would thus be of great benefit to the producer of such UHMWPE materials, particularly in widths greater than a couple of inches, if a much simpler, smaller and less expensive first process step could be substituted for the powder compaction step, without negatively affecting the either the product thus produced or significantly affecting the kinetics of the process, i.e. it did not, for example, slow production to an uneconomical rate.

### Object of the Invention

It is therefore an object of the present invention to provide an enhanced process for the production of UHMWPE sheet that eliminates the need for the previously described compaction step and uses a much more cost effective and simpler process for the production of a high tenacity UHMWPE sheet that can undergo subsequent processing by drawing.

### Summary of the Invention

According to the present invention, there is provided a process for the production of virtually full density polyolefin suitable for further processing by drawing to form a high tenacity, highly oriented polyolefin sheet comprising: a) feeding a metered amount of polyolefin powder into the nip between two vertically stacked and heated calender rolls through application of the polyolefin powder to the apex of the topmost of the two heated calender rolls; b) rolling the powder through the nip until a coherent sheet of polyolefin sheet is produced: and c) once a coherent polyolefin sheet exits the nip adjusting the temperature in the nip to obtain specific tensile and elongation properties. Apparatus for the performance of such a process is also described. Such a process not only eliminates the need for a separate and costly compaction step, but yields a coherent polyolefin sheet that is ready for drawing in accordance with prior art processes for the production of a high tenacity, highly oriented polyolefin sheet having a high heat of fusion. According to a preferred embodiment of the present invention, the polyolefin of choice is ultra high molecular weight polyethylene (UHMWPE).

### Description of the Drawings

Figure 1 is a schematic representation of the production processes of the prior art.
Figure 2 is a schematic diagram of a preferred embodiment of the apparatus used to implement the drawing portion of the preferred process of the present invention.
Figure 3 is a schematic side view of the apparatus used to produce coherent UHMWPE sheet in accordance with one embodiment of the present invention.
Figure 4 is a schematic side view of an alternative preferred embodiment of an apparatus used to produce coherent UHMWPE sheet in accordance with the present invention.
Figure 5 is a schematic side view of yet another alternative preferred embodiment of an apparatus used to produce coherent UHMWPE sheet in accordance with the present invention.
Figure 6 is a schematic side view of yet another alternative preferred embodiment of an apparatus used to produce coherent UHMWPE sheet in accordance with the present invention.

### Detailed Description

In the description that follows, operating parameters, material properties etc. are presented in the context of those for ultra high molecular weight polyethylene (UHMWPE), but it will be readily understood by the skilled artisan in the polymer field that the invention described herein is readily applicable to other polyolefin polymers such as high molecular weight polypropylene through the judicious selection of materials and process conditions appropriate for these other polyolefin materials.

The term "tape" as used herein refers to products having widths on the order of or greater than about 1/2 inch and preferably greater than 1 inch. The term "fiber" as used herein is meant to define a "narrow" tape, i.e. an element narrower than about ½ inch. The term "slit film fiber" refers specifically to a "fiber" or narrow tape made in accordance with the present invention that exhibits a generally rectangular cross-section and smooth, i.e. non-serrated or ragged edges. The terms "sheet" and "film" as used herein is meant to refer to thin sections of the materials of the present invention in widths up to and exceeding 160 inches in width as could be produced in large commercial equipment specifically designed for production in such widths. According to a preferred embodiment, such sheets and tapes have a generally rectangular cross-section and smooth edges. Hence, the fundamental difference between a "tape", a "slit film fiber", a "fiber", a "film" and a "sheet" as used to describe the products of the processes described herein relates to the width thereof and is generally independent of the thickness thereof.

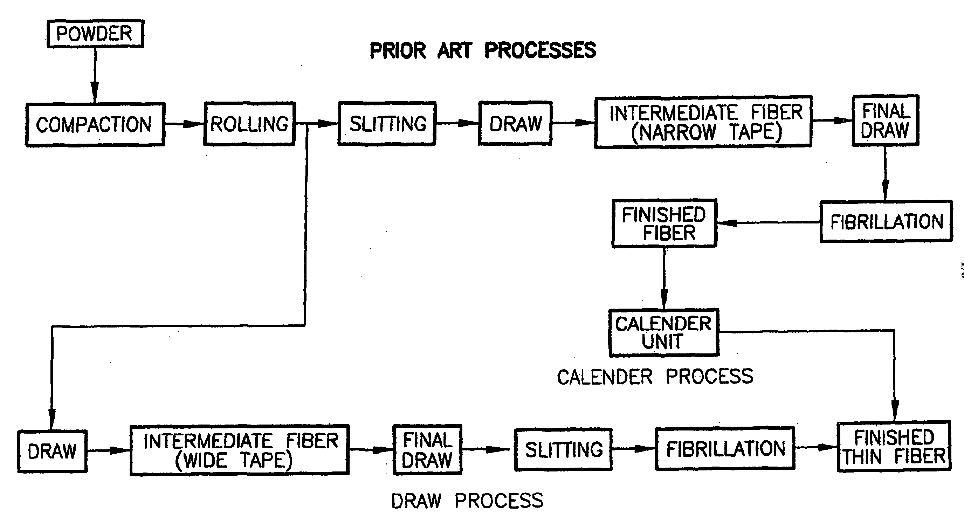

Referring now to Figure 1, the processes described in the prior art and depicted schematically in Figure 1 comprised the continuous production of high strength and high modulus polyolefin films by feeding polyolefin powder between a combination of endless belts disposed in an up and down opposing relationship, compacting the polyolefin powder at a temperature below its melting point between the endless belts and then rolling and stretching the resultant compression molded polyolefin into an oriented film.

A major difference between the processes of the prior art and those of the present invention is that the present invention obviates the need for the compaction step and its related high cost entirely. Thus, the method described herein begins with heated polyolefin powder introduced as described hereinafter directly into a pair of heated, counter rotating calender rolls under very specific temperature and gap conditions to produce a coherent polyolefin sheet suitable for subsequent further drawing to orient the polyolefin and to produce a ballistically useful high tenacity, highly oriented polymeric material.

According to a preferred embodiment of the present invention, the polyolefin processed in accordance with the process of the present invention is an UHMWPE that exhibits high crystalinity (above about 80% as determined by differential scanning calorimetry), a heat of fusion equal to or greater than 220 joules/gram and low levels of entanglement. Thus, it is preferred that the input starting material UHMWPE possess the degree of crystallinity and heat of fusion and meet the low entanglement requirements stated above. Such commercially available materials as Ticona X-168 from Ticona Engineeing Polymers, 2600 Updike Road, Auburn Hills MI 48236 and type 1900 CM from Basell Corp.. 2801 Centerville Road, Wilmington, DE 19808 are useful in the successful practice of the present invention.

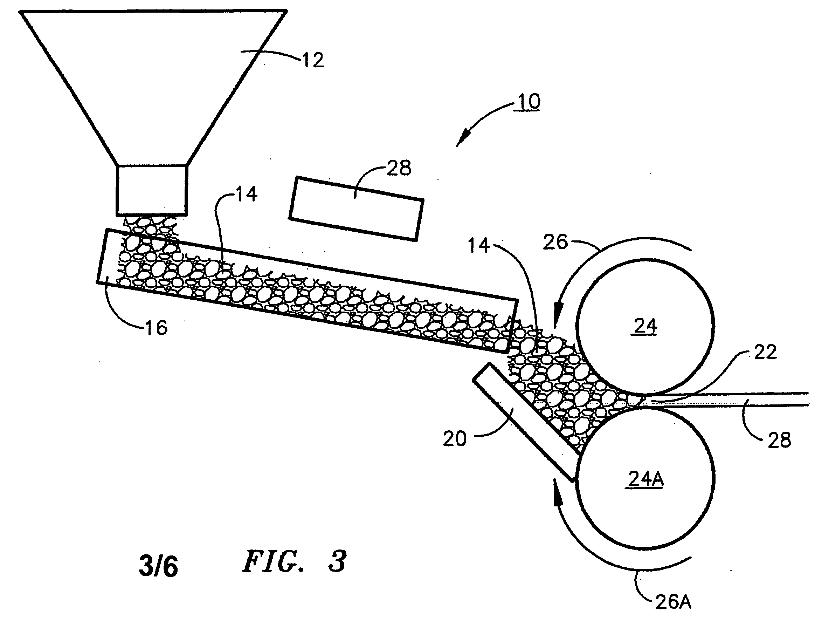

Referring now to the accompanying drawings, as depicted in Figure 3, the initial step in the process of the present invention utilizes a direct roll apparatus 10 comprising a polymer powder hopper 12 that feeds a metered amount of polymer powder 14 into a vibratory chute 16 via a metering device 18 and thence to a containment plate 20. At containment plate 20 the powder is introduced into the gap 22 between two counter rotating heated calender rolls 24 and 24A rotating in the directions shown by arrows 26 and 26A. A heater 27 preferably an infrared heater, imparts heat to powder 14 as described more fully below. Heater 28 is preferably located from about 2 to about 8 inches above powder 14 in vibratory chute 16 and set at a temperature of between about 160 and 220° F. These distances and temperatures will, of course, be variable depending upon the particular polymer powder 14 being processed, and the type of heater used, but have been found suitable for the processing of the preferred UHMWPE. As powder 14 cascades down vibratory chute 16 onto containment plate 20 it builds to a point where it is drawn into gap 22.

According to a preferred embodiment of one aspect of the present invention, at the start of the direct roll process, gap 22 is set narrower than the size of the smallest individual polymer powder particle, for example at about 50µ. Gap 22 may, of course, be widened if the minimum particle size of polymer powder 14 is greater than 50µ. In this instance, successful practice is preferably accomplished by heating rolls 24 and 24 A to a higher initial temperature than if gap 22 is set below the minimum particle size of polymer powder 14. Similarly, at start up of the direct rolling process described herein, heated calender rolls 24 and 24A are preferably heated to a temperature above the melting point of polymer powder 14. While this melting point will be dependent upon the particular material being processed , in the case of the preferred UHMWPE starting materials described elsewhere herein this initial temperature is about 149° C or about 3° C above the melting point of the preferred UHMWPE. Lower temperatures could, of course, be appropriate for lower melting polyolefin materials. At this point, rolling of powder 14 is initiated. As soon as a coherent sheet of polymer 28 begins to emerge from gap 22 the temperature of calender rolls 24 and 24A is reduced to below the melting point of polymer powder 14 and gap 22 is increased to that desired for the final product thickness for coherent sheet 28. As used herein, the term "coherent sheet" is meant to define a polymer sheet that is suitable for further processing by drawing without tearing, ripping or otherwise becoming unusable in such additional processing. For all practical purposes, such a sheet will be virtually fully dense such as in the case of the preferred UHMWPE materials described herein having a density above about 0.945g/cc. For the preferred UHMWPE powders 14 described elsewhere herein the operating temperature (the temperature after formation of a coherent sheet 28 is in the range of from about 136 to about 144° C and preferably between about 139 and about 141° C, and the operating gap is on the order of 100µ and 230µ and preferably at about 140µ. It should be noted that the initial and operating temperatures recited herein are not necessarily set points for the polymer powder/sheet in nip 22, but rather surface temperatures of heated calender rolls 24 and 24A.

While the operating speed of the apparatus just described will vary with the particular polyolefin being processed, using the preferred UHMWPE materials described above, start up roll speeds of between about 1.9 to about 4.0 meters per minute have been found acceptable. Steady state operation of the apparatus is generally within the range of between about 2.0 and about 12.0 meters per minute. It should be noted that these operating speeds are based primarily on ones ability to take up coherent sheet 28 and the size of heated calendar rolls 24 and 24A, since larger rolls will generally tend to increase the surface in contact with the polymer in nip 22. Thus, if downstream operations or take up apparatus are capable of faster speeds, or larger diameter rolls are used, higher operating speeds for the direct roll process just described are possible.

The product of the just described process is a virtually full dense and translucent UHMWPE sheet, i.e. an UHMWPE sheet having a density of about 0.95 to about 0.98 g/cc.

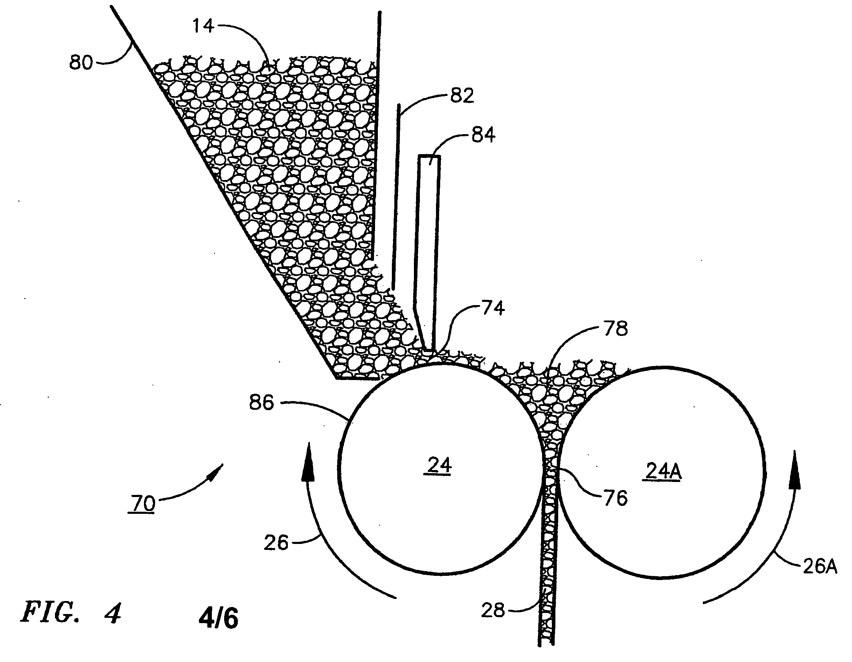

While the apparatus depicted in Figure 3 produces an entirely satisfactory product, certain modifications of the feed system as depicted in Figures 4 - 6c an be made with equally satisfactory, and, in some instances further improved results as described below. As discussed hereinafter, certain process parameters such as the temperature of the rolls and the gap in the nip can be varied when these alternative feed system configurations are used, but otherwise the process and apparatus are essentially as described above.

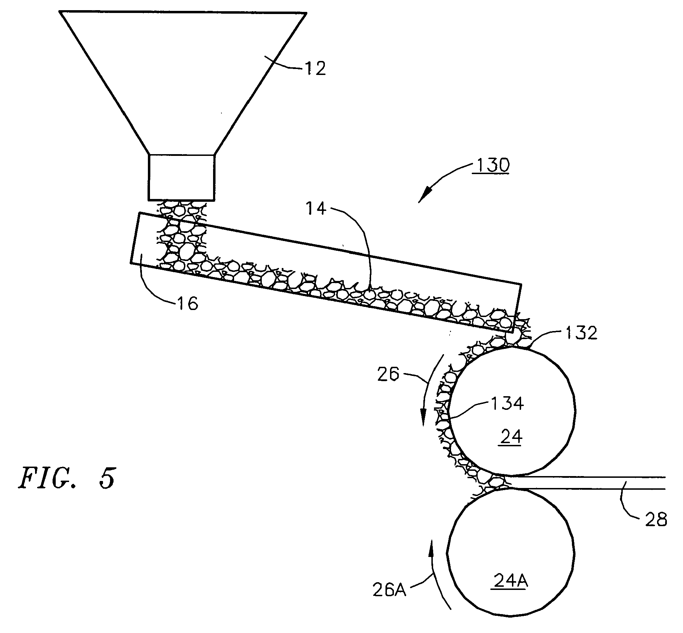

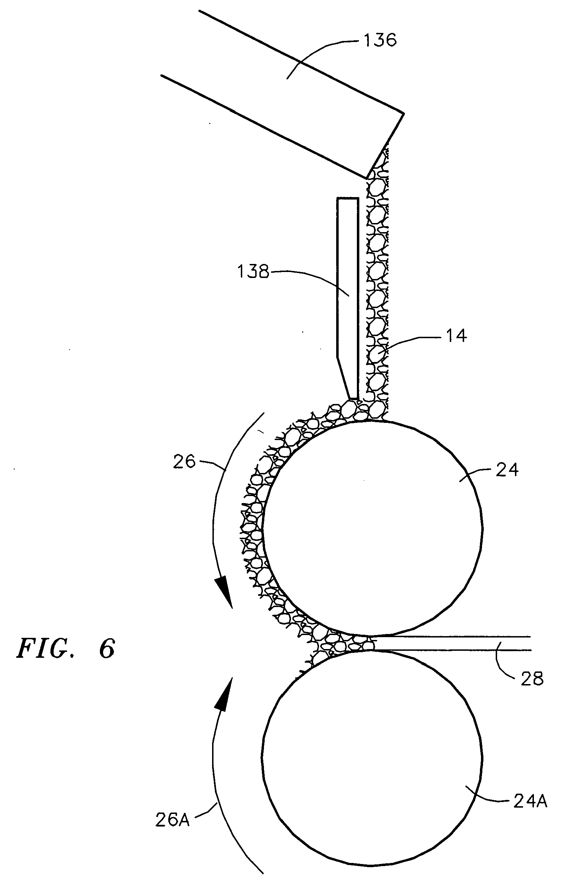

While the apparatus used to practice the process of the present invention is depicted herein as horizontally oriented, the process will operate equally well in a vertical configuration, i.e. with the polymer powder being fed to gap 22 between two horizontally parallel calender rolls 24 and 24A as will be described in greater detail below in connection with Figures 5 and 6. In this alternative orientation, powder 14 is metered from a heated hopper located above horizontally parallel calender rolls 24 and 24A so that powder 24 is fed from above into gap 22 and the product sheet 28 is drawn from below gap 22. All other operating procedures, i.e. temperature control and gap setting variations remain the same.

While not critical to the successful practice of the present invention, and clearly variable depending upon the particular polyolefin being processed, roll surface roughnesses of from about 4 to about 8 RMS have been found suitable for the processing of the preferred UHMWPE materials described herein.

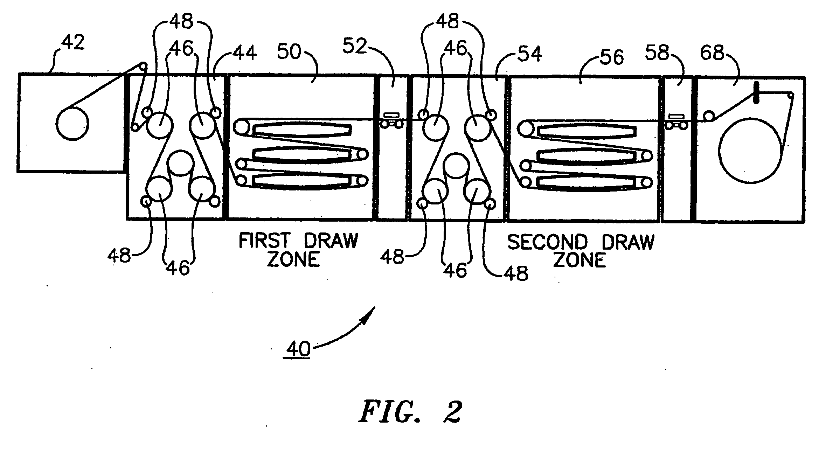

Referring now to accompanying Figure 4 that depicts a schematic side view of the alternative apparatus 70 useful in the successful practice of the alternative process of the present invention, rolls 24 and 24A according to this embodiment are oriented horizontally as opposed to vertically as previously described in connection with Figure 2. As used in the description that follows, the following terms indicated by the reference numerals shown in Figure 4 have the following meanings and purposes: doctor blade gap 74 controls the amount of polymer laid on rolls 24 and 24A and finally introduced into the nip 76. For the horizontal roll arrangement shown in Figure 4, the mass (amount) of polymer laid on the rolls must equal the mass (amount) that exits nip 76 as a sheet; (if the mass is higher, it will build up above nip 76 and eventually spill over the side as waste or create such a high nip pressure the rolls gap will be forced open and/or the roll torque required to turn the rolls will break a mechanical component or stall the drive motor); roll nip or roll gap 76 is the closest distance between opposing rolls 24 and 24A (this is the main parameter that controls rolled sheet thickness); roll nip reservoir 78 is the small reservoir of polymer that sits just above roll nip 76 (in a horizontal arrangement, the polymer touches both rolls and is brought into the nip by friction and compression from both rolls, while in the vertical arrangement previously described, the material is slightly self regulating since it can rest mainly on roll 24A and fall back out of nip 28 if too much powder is present).

In accordance with the embodiment depicted in Figure 4, polymer 14 is supplied from a hopper 80 that includes a hopper gate 82 that helps to control the flow of polymer 14 from hopper 80. Since, as described below, heating of polymer 14 takes place as polymer 14 contacts and is rotated on periphery 86 of roll 24, it is preferred that hopper 80 not be heated, although some small amount of heat can be imparted to polymer 14 while it is resident in hopper 80 and such imparting of minimal amounts of heat, i.e. at temperatures significantly below the melting point of polymer 14 (for example below the 160° F to 220° F preheat temperatures used in the previously described "vertical" process) should be considered as within the meaning of the term "unheated" as used to describe hopper 80 in the appended claims. A doctor blade 84 regulates the flow of polymer 14 from hopper 80 onto roll 24 wherefrom it is transported about the periphery 86 of roll 24 into roll nip reservoir 78. It is preferred, but not absolutely necessary, that doctor blade 84 be vibrated. The setting of doctor blade 84 is determined by sensors (not shown) that detect the amount of powder in the roll nip reservoir 78, the presence and amount of powder, if any, at the horizontal extremes of roll nip reservoir 78 and the force between the rolls. The design, fabrication and operation of such devices are well within the skills of the skilled artisan and, accordingly, are not described in detail herein. Coherent sheet, tape, ribbon, film or fiber 28 emerges from roll nip 76 as in the case of the "vertical" process described above.

In order to better understand the operation of the apparatus just described, it is important to understand the role and the operation of doctor blade 84. The doctor blade gap 74 controls the amount of polymer 14 delivered to the roll nip 76. Roll nip gap 76 controls the amount of polymer 14 removed from roll nip reservoir 78. Roll nip reservoir 78 acts not only as a filter to maintain this balance, but also serves as a means of forcing material into roll nip gap 76. If polymer 14 is delivered from doctor blade gap 74 at a higher rate than it is removed, roll nip reservoir 78 will overflow or become so large that the pressure in roll nip 76 will open roll nip 76, break a mechanical component, or stall the motor. If polymer 14 exits roll nip reservoir 78 faster than it is fed in, the rolled sheet will have insufficient polymer and have voids.

Doctor blade gap 74 and the roll speed control the quantity of polymer 14 delivered to nip 76. The laydown on roll 24A does not need to be as uniform as required by the prior art double belt process of Kobayshi due to the presence of roll nip reservoir 78. Thus, roll nip reservoir 78 serves as a small quantity reservoir (peaks and valleys in the laydown are accumulated and redistributed) and it also allows polymer 14 to move sideways to a small extent.

Similarly, it is important to fully understand the function of roll nip reservoir 78. For a given roll gap 76, the product thickness will remain within a fairly narrow range. The height of roll nip reservoir 78 above roll nip 76 determines how much of polymer 14 is in contact with rolls 24 and 24A and the diameter of rolls 24 and 24A also play a function. As rolls 24 and 24A rotate, polymer 14 is brought closer to roll nip 76 and the density of polymer 14 is increased as it approaches roll nip 76 until at some point it reaches the maximum density for polymer 14. If the volume of polymer 14 in roll nip reservoir 78 is higher, polymer 14 reaches its maximum density earlier in the rotation of the rolls as shown by arrows 26 and 26A. If the amount of polymer 14 in roll nip reservoir 78 is too small, polymer 14 is brought into roll nip 76 and compressed into a compacted sheet but as it approaches roll nip 76, the sheet never reaches full density before it is finally rolled into a sheet at or near the closest point between the rolls, in the center of roll nip 76. In other words, at a given doctor blade gap, a certain amount of polymer 14 is laid on roll 24. The roll speed determines how fast this material is rotated around and fed into the roll nip (gap) 76. However, at this point, it becomes a balancing issue. It is desired that an exit rolled sheet have a given thickness and strength. If polymer 14 is delivered into roll gap 76 in an insufficient amount, and roll gap 76 is held constant, roll nip reservoir 78 will partially empty and the sheet density will fall. The lower density will initially show up as a loss in strength, followed by voids of sufficient size to make the product more opaque. Since insufficient pressure will be exerted on the polymer particles they will not bind together as well and as this binding strength and compression falls, the polymer 14 strength will fall along with increasing voids.

While not absolutely necessary to the successful practice of the present invention, it is desirable to use side or end dams (not shown in the accompanying drawing) to limit lateral movement of polymer 14 against doctor blade 84.

While the size (diameter), finish and speed of rolls 24 and 24A can vary broadly, certain parameters for these elements have been found to be particularly useful in the successful practice of this embodiment of the present invention.. Rolls of 9 and 12 inches in diameter have been found particularly useful, but rolls of larger and smaller diameters can be used providing certain minimum pressures are maintained in roll gap 76. With larger rolls increased speeds are possible due to the longer contact time between the roll and polymer 14 as it rotates in contact with periphery 86. For rolls about 12 inches in diameter, speeds of from about 1 up to about 12 m/min are possible while rotations speeds of between about 1 and to about 3 m/min have been found satisfactory with roll rotation speeds of about 2.3 meters per minute producing highly desirable results with the particular UHMWPE materials being processed. Speed conditions for other roll diameters processing similar UHMWPR polymers are generally as follows: for a 15" diameter roll (1.2 meters circumference), speeds of about 2.88 m/min are highly desirable; and for a 24" roll the optimum speed approaches 4.6 m/min.

Roll surfaces must be hard and possess good wear and abrasion characteristics. The surfaces should be consistently smooth to provide consistent movement of the polymer into roll nip 76. Chrome surfaces in the 1-15 RMS range are preferred. Markings and discoloration of the surfaces have an impact on process performance. If the roll surface shows discoloration, more or less heat transfer occurs. This can leave a minor mark on the product and at worse a weak spot.

Again, while roll gap 76 can vary widely depending upon the polymer being processed, the diameter of rolls 24 and 24A, etc. for the production of UHMWPE sheet in a thickness range of from about 0.05 and about 0.25 mm in accordance with this embodiment, roll gaps of between about 0.015 and about 0.35 mm have proven satisfactory with rolls of a size as specified herein. These ranges should be considered merely as guidelines as wider or narrower roll gaps my be necessary or desired depending upon the various parameters, especially roll diameter, described hereinabove.

As with the previously described vertical roll process, certain start-up parameters are desirable, but, depending upon the polymer material being processed, not absolutely necessary. According to one preferred embodiment, it is preferred that at start up the rolls be heated to a temperature of from about 1 to about 5 degrees above the melting point of the polymer being processed and the roll gap be set at from about 20 to about 50 microns smaller than the operating roll gaps suggested above. Under operating conditions, for the processing of UHMWPE, the roll temperatures should be in the range of from about 130° C and about 150° C, preferably in the range of from about 132° C and about 143° C, and most preferably between about 136° C and about 140° C. While these start up conditions are preferred for certain of the UHMWPE materials discussed herein, they are not critical and in many instances the gap and temperature requirements at start up are similar to those used during operation. For example, in certain cases, operating temperatures of between about 130° C and 146° C will be satisfactory with narrower temperature ranges of from about 136.5° C to about 142° C desirable at roll speeds of between about 1 and about 4 meters per minute. Roll gaps at start up will generally be about the same as those used under operating conditions, i.e. between about 0.015 and about 0.35 mm using the materials and conditions described herein. Applicants do not, however, wish to be bound to specific narrow start up and operating conditions as these will vary widely depending upon the material being processed, the desired product sheet thickness, the roll temperature, the roll speed, the roll size, the roll finish, etc.

As will be apparent to those skilled in the art, it would be an obvious alteration of the instantly described "horizontal" process to use a pair of mirror imaged hopper 80, and doctor blade 84 arrangements to obtain a coherent sheet 28. Such an alteration of apparatus 70 can result in higher operating speeds.

One very significant advantage of the just described alternative process is that it broadens somewhat the range of useful starting materials/polymers. Using this "horizontal" process just described, UHMWPE polymers having molecular weights as low as 1 million and exhibiting heats of fusion as low as about 190 joules per gram and concomitantly lower degrees of crystallization have been successfully processed into ballistic and high impact resistant sheets, ribbons, tapes, films and fibers that exhibit properties similar to those of material produced in accordance with the "vertical" roll process described above and the modified Kobayashi process described in U.S. Patent No. 7,348,053.

In the modified alternative preferred feed system apparatus 130 shown in Figure 5, the vertical positioning of rolls 24 and 24A is essentially as shown in Figure 3. As shown in this Figure, the feed system comprises a hopper or other source of UHMWPE or other polymer 12 that meters the flow of polymer powder 14 to a transfer chute 16 that may comprise a vibratory chute, screw drive or the like to deliver a metered amount of polymer powder 14. The distinction between this feed system and that described in connection with Figure 3, is that instead of feeding polymer powder 14 directly into the nip or gap 22 between heated calender rolls 24 and 24A, polymer powder 14 is controllably applied in the vicinity of the apex 132 of top roll 24 wherefrom it is drawn on the surface 134 of top roll 24 in the direction shown by arrow 26 which is the direction of rotation of heated calender roll 24. In order for such transfer on the surface of heated calender roll 24, heated calender roll 24 must be maintained at a temperature such that the applied polymer 14 is at or near its incipient melting point, i.e. the temperature at which the onset of melt is detected as determined by differential scanning calorimetry (DSC). This temperature can and will, of course, vary widely depending upon the polymer powder 14 being introduced and the temperature at which it exhibits the onset of melt. In the embodiments depicted in Figures 5 and 6, start up is preferably performed with gap 22 set at a depth necessary to yield the thickness of the desired coherent polymer sheet product 28 as distinguished from the smaller gap settings specified for the alternative feed systems described above. Since the polymer powder is applied at apex 132 and roll 24 is set to address polymer powder 14 at a temperature that is at or approaching the onset of melt, a wider gap setting may be used at start up since polymer powder 14 already being "softened" as it travels around surface 134 will tend to "agglomerate" or "thicken" and form a sheet shape of the appropriate thickness as it passes through gap 22 even if gap 22 is set at a depth greater than that of the smallest particle of polymer powder 14. It should be noted that the laydown of polymer powder 14 on roll 24 does not have to be exact across the width of roll 24 at apex 132 since the polymer powder will tend to redistribute along nip or gap 22 to form a sheet of the desired width so long as the polymer feed is provided in accordance with and related to the width requirements of coherent sheet 28.

Referring now to Figure 6, the feed system depicted in this Figure includes a metering mechanism such as a screw drive or vibratory chute 136 for feeding a metered amount of polymer powder 14 whose application in the vicinity of apex 132 of roll 24 is controlled through the use of a doctor blade 138 that controls the thickness of the applied layer of polymer powder 14. Otherwise, the apparatus is similar to that depicted in Figures 4 and 5.

As alluded to hereinabove, it is important to the successful practice of the present invention that roll 24 be maintained at a temperature at or near the onset of melt of the particular polymer being processed as determined by DSC. Thus, while, for example, UHMWPE polymers can be processed at temperatures between about 130° C and about 145° C. Operating temperatures for roll 24 in the various embodiments depicted herein of from about 12° C below the onset of melt to about 8° C above the onset of melt have proven useful for a variety of UHMWPE powders. Operating temperatures in the range of from about 8° C below to about 4° C above the onset of melt for a particular polymer are preferred and most preferred are operating temperatures in the range of from about 2° C above to about 2° C below the onset of melt for the particular polymer being processed as determined by differential scanning calorimetry. The operating speeds for the apparatus depicted in Figures 4 and 5 are generally similar to those for the apparatus depicted n Figure 3 as previously described. Start up temperatures between about +1° C and -1° C and preferably within the range of from about +1/2° C and -1/2° C of the onset of melt for the particular polymer being processed as determined by DSC are specifically preferred but not essential to the successful practice of the present invention.

A major advantage of the use of the apparatus and process described in connection with Figures 5 and 6 is that significantly higher tensile values (plus about 10%) can be obtained using the arrangement and process just described.

Post-processing of coherent sheet 28 to obtain a highly useful UHMWPE ballistic sheet, film, tape or fiber is performed in much the same fashion as and in apparatus similar to that described in issued U.S. Patent No. 7,348,053, issued March 25, 2008, i.e. by drawing coherent sheet 28 which are referred to.

Referring now to Figure 2, the drawing apparatus utilized to achieve the thickness reductions of the coherent sheet produced as just described that result in production of the preferred UHMWPE products of the present invention 10 comprises:
a payoff 42, a godet stand 44 including heated godet rolls 16 (to anneal the product) and nip rolls 48 for establishing and maintaining tension in the line, a first draw zone 50 , a first in-line tension sensor 52, a second godet stand 54, a second draw stand 56, a second in-line tension sensor 58, a third godet stand 60 and according to the preferred embodiment, a fibrillation unit 62, a nip roll stand 64 for maintaining tension and godet station 66 comprised of unheated take-up rolls 68. As seen from Figure 1, the input or starting material of this process is generally the thick, compacted and rolled but unoriented product of the compaction step of the prior art production process. According to the preferred process of the present invention,the input or starting material in the drawing/calendaring process steps described below is, of course, coherent sheet 28 that emerges from gap 22 in the process described above.

Each of the elements of the apparatus just described and utilized in the successful practice of the present invention are well known in the film and fiber drawing arts as is their combination in a line of the type just described. Consequently, no detailed description of such a line is required or will be made herein and the reader is referred to the numerous design manuals and descriptions of such apparatus commonly available in the art.

Maintaining a constant tension of between about 0.5 and about 5g/ denier, and preferably between about 0.8 and 3 g/denier during drawing is also important to the production of product having the required "thinness" and other enhanced properties specified herein. The term "denier" as used herein is defined as the weight in grams of 9000 meters of the product film, tape, sheet or fiber. At tension levels below 0.5g/denier no significant drawing or reduction will be obtained while at tension levels above about 5g/denier the material will tend to separate. In the case of drawing, tension is a function of the feed polymer and can vary broadly depending thereon and the ranges just specified refer to those found useful with particular preferred UHMWPE commercial starting materials.

Total reductions achieved during drawing and calendaring will generally be between about 50:1 and about 170:1 or more depending again upon the input raw material and the end use to which the product is to be applied. Such total drawing and calendaring is computed as the multiple of each of the individual reductions achieved by each of the combined process steps.

According to a highly preferred embodiment of the present invention, drawing is performed in line with direct rolling as described hereinabove. In such a continuous process, calender rolls 24 and 24A become payoff 72 of drawing apparatus 70. Such an arrangement provides a highly efficient method for practicing the novel production process of the present invention.

After thickness reduction by drawing in the apparatus shown in Figure 2 according to the processing parameters just described, the UHMWPE films, sheets, fibers or tapes thus produced exhibit heats of fusion at or above about 243 joules/gram, tenacities in the range of from about 18 and 20 g/, tensile moduli between about 1200 and about 1800 g/d and elongations in the range of from about 1.6 to about 2.0 percent.

While the description herein is presented largely in the context of the advantages appurtenant to a method and apparatus for the production of highly oriented UHMWPE sheet, it will be readily apparent that the practices and apparatus described could be readily adapted to the production of other polyolefin materials such as polypropylene and lower molecular weight polyethylene, for example, polyethylene having a molecular weight in the range of 800,000 and above.

There have thus been described novel processes for the production of coherent polyolefin, preferably UHMWPE, sheet and high tenacity, highly oriented polyolefin, preferably UHMWPE, sheet, film, tape or fiber that eliminates the need for the prior art compaction step which, until the development described herein, was considered necessary for the successful production of such materials.

As the invention has been described, it will be apparent to those skilled in the art that the same may be varied in many ways without departing from the scope of the invention. Any and all such modifications are intended to be included within the scope of the appended claims.

## Claims

1. A process for the production of a high tenacity, highly oriented film, tape, fiber, ribbon or sheet from a polyolefin powder comprising:
a) feeding a metered amount of ultra high molecular weight polyethylene (UHMWPE) powder to an apparatus comprising:
i) a pair of vertically oriented, counter rotating heated calender rolls defining a nip there between and including a top and a bottom heated calender roll, the top heated calender roll having an outer surface and an apex; and
ii) a metering mechanism for feeding a metered amount of the UHMWPE powder to the apex of said top roll wherefrom the UHMWPE powder is delivered to the nip by rotation about the surface of said top roll from the apex to the nip;
b) rolling the UHMWPE powder through the nip under these conditions until a virtually full density coherent polyolefin sheet is produced;
c) once the virtually full density coherent polyolefin sheet exits the nip, adjusting the temperature in the nip to a temperature between 12 °C lower to 8 °C higher than the onset of melt for the particular UHMWPE powder being processed as determined by differential scanning calorimetry; and
d) drawing the virtually full density coherent polyolefin sheet while maintaining a constant tension to produce the high tenacity, highly oriented UHMWPE film, tape, fiber, ribbon or sheet having a high heat of fusion.

2. The process of claim 1 wherein the UHMWPE exhibits a crystallinity of greater than 80% as determined by differential scanning calorimetry, a heat of fusion equal to or greater than 220 joules/gram and low levels of entanglement.

3. The process of claim 2 wherein the temperature in step c is between 130° C and 150° C.

4. The process of claim 3 wherein the operating temperature in step c is between 8 degrees lower and 4 degrees higher than the onset of melt for the particular UHMWPE powder being processed as determined by differential scanning calorimetry.

5. The process of claim 4 wherein the operating temperature in step c is between 2 degrees lower and 2 degrees higher than the onset of melt for the particular UHMWPE powder being processed as determined by differential scanning calorimetry.

6. The process of claim 5 wherein the counter rotating calender rolls rotate at a rate of between 1 and 12 meters/minute.

## Patentansprüche

1. Verfahren zur Herstellung einer hochorientierten Folie, eines hochorientierten Bands, einer hochorientierten Faser, eines hochorientierten Streifens oder einer hochorientierten Platte, alle von hoher Reißfestigkeit, aus einem Polyolefinpulver, umfassend:
a) das Führen einer dosierten Menge von ultrahochmolekularem Polyethylen-(UHMWPE-) Pulver zu einer Vorrichtung, umfassend:
i) ein Paar senkrecht orientierter, gegenläufig rotierender, erhitzter Kalandrierwalzen, die einen Spalt dazwischen definieren und eine obere und untere erhitzte Kalandrierwalze umfassen, wobei die obere erhitzte Kalandrierwalze eine Außenfläche und einen Scheitelpunkt aufweist; und
ii) einen Dosiermechanismus zum Führen einer dosierten Menge des UHMWPE-Pulvers zum Scheitelpunkt der oberen Walze, wovon das UHMWPE-Pulver zum Spalt durch Rotation um die Oberfläche der oberen Walze vom Scheitelpunkt zum Spalt geliefert wird;
b) das Walzen des UHMWPE-Pulvers durch den Spalt unter diesen Bedingungen, bis eine kohärente Polyolefinplatte praktisch voller Dichte hergestellt wird;
c) wenn die kohärente Polyolefinplatte praktisch voller Dichte aus dem Spalt austritt, das Einstellen der Temperatur in dem Spalt auf eine Temperatur zwischen 12 °C unter bis 8 °C über dem Einsetzen des Schmelzens bei dem spezifischen UHMWPE-Pulver, das verarbeitet wird, wie durch Differentialscanningkalorimetrie bestimmt; und
d) das Ziehen der kohärenten Polyolefinplatte praktisch voller Dichte, während eine konstante Spannung beibehalten wird, um die hochorientierte UHMWPE-Folie, das hochorientierte UHMWPE-Band, die hochorientierte UHMWPE-Faser, den hochorientierten UHMWPE-Streifen oder die hochorientierte UHMWPE-Platte, alle von hoher Reißfestigkeit, die eine hohe Schmelzhitze aufweisen, herzustellen.

2. Verfahren nach Anspruch 1, wobei das UHMWPE eine Kristallinität von mehr als 80 %, wie durch Differentialscanningkalorimetrie gemessen, eine Schmelzwärme gleich oder höher als 220 Joules/Gramm und geringe Verwirrungsniveaus aufweist.

3. Verfahren nach Anspruch 2, wobei die Temperatur in Schritt c zwischen 130 °C und 150 °C liegt.

4. Verfahren nach Anspruch 3, wobei die Arbeitstemperatur in Schritt c zwischen 8 Grad unter und 4 Grad über dem Einsetzen des Schmelzens bei dem spezifischen UHMWPE-Pulver, das verarbeitet wird, wie durch Differentialscanningkalorimetrie bestimmt, liegt.

5. Verfahren nach Anspruch 4, wobei die Arbeitstemperatur in Schritt c zwischen 2 Grad unter und 2 Grad über dem Einsetzen des Schmelzens bei dem spezifischen UHMWPE-Pulver, das verarbeitet wird, wie durch Differentialscanningkalorimetrie bestimmt, liegt.

6. Verfahren nach Anspruch 5, wobei die im Gegensinn rotierenden Kalandrierwalzen mit einer Geschwindigkeit zwischen 1 und 12 Metern/Minute rotieren.

## Revendications

1. Procédé de production d'un film, d'une bande, d'une fibre, d'un ruban ou d'une feuille de ténacité élevé(e), fortement orienté(e) à partir d'une poudre de polyoléfine comprenant:
a) l'alimentation d'une quantité dosée d'une poudre de polyéthylène d'ultra haut poids moléculaire (UHMWPE) à un appareil comprenant:
i) une paire de rouleaux de calandrage chauffés tournant en contre-rotation, verticalement orientés définissant un resserrement entre eux et incluant un rouleau de calandrage chauffé supérieur et inférieur, le rouleau de calandrage chauffé supérieur ayant une surface externe et un apex; et
ii) un mécanisme de dosage pour alimenter une quantité dosée de la poudre d'UHMWPE à l'apex dudit rouleau supérieur à partir duquel la poudre d'UHMWPE est fournie au resserrement par la rotation autour de la surface dudit rouleau supérieur à partir de l'apex jusqu'au resserrement;
b) laminage de la poudre d'UHMWPE à travers le resserrement sous ces conditions jusqu'à ce qu'une feuille de polyoléfine cohérente virtuellement de pleine densité soit produite;
c) une fois que la feuille de polyoléfine cohérente virtuellement de pleine densité sort du resserrement, l'ajustement de la température dans le resserrement jusqu'à une température comprise entre 12°C inférieurs à 8°C supérieurs à l'apparition de la fusion pour la poudre d'UHMWPE particulière qui est transformée telle que déterminée par calorimétrie différentielle à compensation de puissance; et
d) étirage de la feuille de polyoléfine cohérente virtuellement de pleine densité tout en conservant une tension constante afin de produire le film, la bande, la fibre, le ruban ou la feuille d'UHMWPE de ténacité élevé(e), fortement orienté(e) ayant une température de fusion élevée.

2. Procédé selon la revendication 1 dans lequel l'UHMWPE fait preuve d'une cristallinité supérieure à 80 % telle que déterminée par calorimétrie différentielle à compensation de puissance, d'une chaleur de fusion égale ou supérieure à 220 joules/gramme et de faibles niveaux d'enchevêtrement.

3. Procédé selon la revendication 2 dans lequel la température dans l'étape c est comprise entre 130°C et 150°C.

4. Procédé selon la revendication 3 dans lequel la température de fonctionnement dans l'étape c est comprise entre 8 degrés inférieurs et 4 degrés supérieurs à l'apparition de la fusion pour la poudre d'UHMWPE particulière qui est transformée telle que déterminée par calorimétrie différentielle à compensation de puissance.

5. Procédé selon la revendication 4 dans lequel la température de fonctionnement dans l'étape c est comprise entre 2 degrés inférieurs et 2 degrés supérieurs à l'apparition de la fusion pour la poudre d'UHMWPE particulière qui est transformée telle que déterminée par calorimétrie différentielle à compensation de puissance.

6. Procédé selon la revendication 5 dans lequel les rouleaux de calandrage en contre-rotation tournent à une vitesse comprise entre 1 et 12 mètres/minute.
